# EUROPÄISCHE PATENTSCHRIFT

(11) **EP 0 432 852 B1**
(45) Veröffentlichungstag und Bekanntmachung des Hinweises auf die Patenterteilung: **25.05.1994**
(21) Anmeldenummer: 90203243.2
(22) Anmeldetag: 10.12.1990
(51) Int. Cl.: H02K 7/118

(54) **Anlaufhilfe für einen zweipoligen Einphasensynchronmotor mit dauermagnetischem Rotor**
Starting device for a two-pole single-phase synchronous motor with permanent magnet rotor
Dispositif de démarrage pour un moteur synchrone monophasé bipolaire avec rotor à aimant permanent

(30) Priorität: 14.12.1989 DE 3941204
(43) Veröffentlichungstag der Anmeldung: 19.06.1991
(73) Patentinhaber: Philips Patentverwaltung GmbH, 22335 Hamburg (DE); Philips Electronics N.V., 5621 BA Eindhoven (NL)
(72) Erfinder: Schemmann, Hugo, Dr., NL-Schaesberg (NL); Bertram, Leo, W-5190 Stolberg (DE)
(74) Vertreter: Kupfermann, Fritz-Joachim, Dipl.-Ing.

(56) Entgegenhaltungen:
- DE-A- 3 420 371
- DE-U- 8 703 451
- FR-A- 2 184 170
- GB-A- 1 413 782

## Beschreibung

Die Erfindung bezieht sich auf eine Anlaufhilfe für einen zweipoligen Einphasensynchronmotor mit dauermagnetischem Rotor und einem magnetischen Klebemoment, welches über eine Umdrehung gesehen positive und negative Werte hat mit sich daraus ergebenden stabilen und labilen Ruhelagen, wobei die stabilen Ruhelagen um den Asymmetriewinkel γ in positiver Richtung gegenüber der mittleren Feldrichtung des Statorfeldes versetzt sind und ein kritisches Klebemoment Mₖₗₖᵣ im Parallelstand von Statorfeld und Rotorfeld wirksam ist, bestehend aus einem Verdrehspiel zwischen einem mit dem Rotor verbundenen Mitnahmeteil und einem Lastteil sowie einer Richtungssperre, wobei der Spielwinkel ε des Verdrehspiels zwischen den lastseitigen und motorseitigen Bauteilen, um den die Bauteile sich gegeneinander entkuppelt verdrehen können, in positiver und negativer Drehrichtung begrenzt ist mittels positiver und negativer Spielwände der rotor- bzw. lastseitigen Bauteile.

Aus der Zeitschrift ETZ-Band 30, 1978, Heft 2, Seiten 56 bis 60, ist eine Anlaufhilfe für einen Einphasensynchronmotor ohne Hilfsdrehfeld bekannt. Charakteristisch für den dabei zum Einsatz kommenden Einphasensynchronmotor ist es, daß er nicht sicher anlaufen kann, wenn beim Einschalten des Motors das an der Rotorachse wirksame Reibungsmoment größer ist als die Summe aus dem stellungsabhängigen Moment, welches vom Statorstrom auf den Magnetrotor ausgeübt wird, und dem ebenfalls stellungsabhängigen magnetischen Reluktanzmoment, im folgenden Klebemoment genannt, welches bei stromlosen Statorspulen auf den Magnetrotor aufgrund der Änderung der magnetischen Energie bei einer mechanischen Verdrehung des Rotors wirkt. Besonders kritisch sind hierbei die Rotorpositionen, in welchen das vom Strom ausgeübte Moment gleich Null ist. Das ist dann der Fall, wenn der mit den Statorspulen gekoppelte Rotorfluß ein Maximum durchläuft, bildlich gesprochen dann, wenn Rotorfeld und Statorfeld parallel sind. Bei einer zweipoligen Rotor-Statoranordnung ist dies zweimal pro Umdrehung der Fall. Durch eine geeignete Formgebung des Luftspaltes zwischen Rotor und Stator läßt sich erreichen, daß der Nulldurchgang des Klebemomentes nicht mit der Parallelstellung zusammenfällt, das Klebemoment den Rotor demnach aus dieser Stellung zu drehen versucht. Dies ist aber nur dann möglich, wenn das dort wirksame Reibungsmoment kleiner ist als der Wert des dort wirksamen Klebemomentes. In der Praxis wird dadurch das für den Anlauf zulässige Reibungsmoment auf 10 bis 50 % des Motorkippmomentes nach erfolgtem Anlauf begrenzt. Darum besteht immer die Gefahr, daß ein Gerät bei ungünstigen Toleranz- und Lastverhältnissen nicht startet.

In der genannten Veröffentlichung wird deshalb vorgeschlagen, die bei hoher Reibungsbelastung bestehende Anlaufproblematik dadurch zu beseitigen, daß der Rotor durch eine Zusatzmechanik aus dem Parallelstand gedreht wird. Durch eine Feder-Nockenkonstruktion wird auf den Rotor ein Drehmoment ausgeübt, welches im Parallelstand das Klebemoment unterstützt und den Rotor somit auch bei größeren Reibungsmomenten in positiver Richtung aus der kritischen Stellung bewegt, wobei definitionsgemäß die Drehrichtung, in welcher das Klebemoment im Parallelstand wirksam ist, als die positive bezeichnet wird. Die beschriebene Hilfsanordnung ist jedoch aufwendig und erfordert zusätzliches Einbauvolumen.

Aus der GB-PS 14 13 782 ist eine Anordnung zum Starten eines Synchronmotors bekannt, bei welcher der Rotor auf einer Festachse drehbar gelagert ist und ein auf ihm sitzendes Kupplungsteil mit einem Verdrehspiel in ein Gegenstück der Kupplung eingreift, das Bestandteil eines Ritzels ist, so daß die volle Last am Rotor nicht unmittelbar wirksam wird. In Verbindung mit einer Rücklaufsperre ist hier der rotorseitige Spielwinkel laut Zeichnung etwa 66°.

Aus der DE-OS 34 20 371 ist eine Anordnung zum Starten eines Synchronmotors bekannt, bei der ein permanentmagnetisch erregter Rotor zur Sicherstellung des Anlaufs unter Last mit Verdrehspiel auf der Antriebswelle gelagert ist. Hierdurch soll ein nahezu lastfreier Anschwingvorgang für den Rotor ermöglicht werden, welcher nach Durchlaufen des Verdrehspiels mit einem ersten Kupplungsteil an einem zweiten, mit der Antriebswelle verbundenen Kupplungsteil angreift und die Antriebswelle mitnimmt. Zur Erzwingung einer vorgegebenen Drehrichtung des Rotors ist eine Drehrichtung-Sperrvorrichtung vorgesehen, welche die eine Drehrichtung der Last freigibt, während die andere Drehrichtung der Last blockiert wird.

Diese Anordnung hat den Vorteil, daß beim Durchlaufen des Spiels lediglich die Lagerreibung des Rotors auf der Antriebswelle wirksam ist und keine zusätzlichen Reibungs- oder Trägheitsmomente die Rotorbewegung behindern. Bei der Verwendung des Synchronmotors zum Antreiben einer Flüssigkeitspumpe, beispielsweise der Laugenpumpe einer Waschmaschine, kann es der Fall sein, daß nach längerem Stillstand die Dichtungen auf der Antriebswelle festkleben und ein Anlaufen des Rotors behindern. Wenn der Rotor sich zunächst frei auf der Antriebswelle drehen kann, spielt dies keine Rolle.

In der DE-OS 34 20 371 ist als Drehrichtungssperre ein Freilauflager beschrieben, welches nur eine Drehrichtung zuläßt. In einer anderen Variante greift eine Sperrklinke in ein Zahnrad mit einer großen Zahl von Ratschzähnen ein und sperrt somit eine der beiden möglichen Drehrichtungen, wobei der Sperrwinkel wegen der großen Zahnzahl klein ist. Unter dem Sperrwinkel wird dabei der Winkel verstanden, den der Rotor, abhängig von seiner Stellung in Sperrichtung, maximal durchlaufen kann, bevor er angehalten wird.

In der DE-GmS 87 03 451 ist ein selbstanlaufender Synchronmotor mit Rücklaufsperre beschrieben mit einer in einem Gehäuse gelagerten, den Rotor tragenden Rotorwelle und mit Kupplungsmitteln zwischen dem Rotor und dessen Drehbewegung weiterleitenden Teilen, die einen sich über einen vorgegebenen Winkel erstreckenden Freigang ermöglichen, sowie ferner mit die Rotordrehbewegung in der unzutreffenden Richtung durch einen mechanischen Anschlag sperrenden Mitteln, wobei
a) ein Arretierglied an der Rotorwelle drehfest angeordnet ist,
b) der Rotor auf der Rotorwelle drehbar gelagert ist,
c) das Arretierglied in der zutreffenden Drehrichtung des Rotors von diesem mitgenommen wird und
d) das drehfest auf der mit der Last verbundenen Rotorwelle angeordnete Arretierglied in der unzutreffenden Drehrichtung durch die Rotorbewegung in einen gehäusefesten Eingriff gedrückt wird.

Konstruktionsbedingt ist bei dieser Anordnung der mögliche Spielwinkel laut Zeichnung kleiner als ca. 140°. Bei Verwendung von nur einer Sperrnase kann der Spielwinkel ca. 300° betragen. Die Sperrung erfolgt in zwei bestimmten Winkelpositionen der Last, die jedoch ebenso wie die gesperrte Drehrichtung, nicht näher definiert werden.

Alle beschriebenen Anordnungen gehen davon aus, daß der Rotor sich beim Einschalten der Spannung in einer Ruhelage befindet, in welcher die Magnetisierungsrichtung des Rotors einen Winkel mit der Richtung des Statorfeldes bildet, welcher sich ergibt aufgrund des Klebemomentes, welches den Rotor aus der Parallelstellung verdreht. In diesem Fall wird auf den Rotor vom Statorfeld ein Drehmoment ausgeübt, und er kann innerhalb des Spielbereiches ungehindert Bewegungen ausführen. Diese Betrachtungsweise ist aber in der Realität nicht ausreichend.

Bei einer Anordnung ohne Rücklaufsperre kann das Spiel nur dann sicher die angestrebte Funktion erfüllen, wenn das Reibungsmoment der Last kleiner ist als das sogenannte kritische Klebemoment; dies ist das Klebemoment, welches in der Parallelstellung wirksam ist und den Rotor aus dieser kritischen Position zu drehen versucht. Es kann beim Abschalten des Motors und anschließendem Auslaufen des Systems vorkommen, daß die das Verdrehspiel in positiver Drehrichtung des Rotors begrenzende Wand, im folgenden die positive Rotorspielwand genannt, beim Auslaufen des Systems stehen bleibt in einer Stellung, in der der Rotor sich in der Parallelstellung befindet und die positive Rotorspielwand an der positiven Lastspielwand anliegt.

Bei hoher Lastreibung ist dies besonders wahrscheinlich, wenn die Anordnung aus der positiven Laufrichtung heraus abgeschaltet wird. Die positive Rotorspielwand wird dann durch das Klebemoment in positiver Richtung gegen die positive Lastspielwand gedrückt. In positiver Richtung ist der Rotor dann formschlüssig mit der Last gekoppelt. Wenn die Lastreibung größer ist als das kritische Klebemoment, kann der Rotor dann in Parallelstellung stehen bleiben; bei erneutem Einschalten der Spannung läuft er dann nicht an. Je nach Größe der Lastreibung gilt die geschilderte Situation für einen mehr oder weniger breiten Bereich um die Parallelstellung herum.

Hierdurch wird der Effekt der Spielkupplung zunichte gemacht, und es erfolgt kein Anlauf. Die Anordnung blockiert.

Beim Abschalten aus der negativen Drehrichtung heraus kann die positive Lastspielwand ebenfalls in der beschriebenen Position stehenbleiben. Die negative Rotorspielwand liegt beim Auslaufen zunächst jedoch an der negativen Lastspielwand an, und der Rotor kann beim Anschalten der Spannung in Bewegung kommen. Überraschenderweise zeigt sich aber, daß auch bei vorgegebener negativer Drehrichtung der Anlauf nicht gesichert ist. Schaltet man den Motor wiederholt ein, so wird er im allgemeinen anlaufen, ab und zu bleibt er jedoch dennoch stehen. Dieses Hängenbleiben kann unter Umständen nur sehr selten erfolgen, ist für den Einsatz des Motors jedoch nicht tolerierbar.

Auch bei beliebiger Stellung der Last- und Rotorspielwände und wenn der Rotor beim Anlaufen zunächst in Bewegung kommt, kann infolge des irregulären Anlaufvorgangs von Synchronmotoren durch dynamisches Verschieben der Spielwände eine der kritischen, oben beschriebenen Situationen eintreten.

Die in der DE-OS 34 20 371 und der DE-GmS 87 03 451 angeführten Richtungssperren haben die Funktion der Richtungsvorgabe in eine Richtung, welche das angetriebene Aggregat vorgibt. Das kann die positive, aber auch die negative Richtung sein. Die Richtungssperren wirken dabei auf die Last und nur über das Spiel, nicht aber direkt auf den Rotor. Ein Einfluß der Richtungssperre und einer bestimmten Drehrichtung auf die grundsätzliche Ermöglichung des Anlaufens ist nicht beschrieben.

Von den angeführten Sperren wird lediglich global gesagt, daß sie eine Richtung sperren und die andere freigeben. Als Ausführungsbeispiele werden in der DE-OS 34 20 371 Freilauflager, die im allgemeinen direkt greifen, und Sperrklinkenanordnungen mit kleinem Sperrwinkel genannt.

In der DE-GmS 87 03 451 wird die Last in einer bestimmten Position zweimal pro Umdrehung gesperrt. Hierdurch ergibt sich ein Sperrwinkel von annähernd 180°. Das Spiel zwischen Rotor und Last ist bei dieser Anordnung laut Zeichnung begrenzt auf etwa 140°. Bei Verwendung von nur einer Sperrnase kann der Spielwinkel ca. 300° betragen.

Die Spielmittel sind direkt am Rotor angebracht.

Bei der GB-PS 14 13 782 erfolgt die Sperrung des Systems durch Zusammenwirken von Rotor und Last, welche nur in bestimmten gegenseitigen Positionen einen Freilauf ermöglichen.

Ist nun vorgesehen, daß die negative Drehrichtung gesperrt wird, so ergeben sich bei Lastreibungen, die größer sind als das kritische Klebemoment beim Auslaufen, die oben geschilderten Verhältnisse wie bei einer Anordnung ohne Sperre, und der Motor kann in der Parallelstellung stehen bleiben.

Ist die positive Lastdrehrichtung gesperrt und kommt die positive Lastspielwand in einer Stellung zur Ruhe, in der der Rotor bei an ihr anliegender positiver Rotorspielwand in Parallelstellung liegt, so kann der Rotor, auch wenn die negative Rotorspielwand beim Auslaufen zunächst an der negativen Lastspielwand, also unter einem Winkel zum Statorfeld, stehen geblieben ist, beim Einschalten der Spannung überraschenderweise dennoch nicht zum Anlauf gelangen.

Die in der DE-OS 34 20 371 genannten Anlaufhilfen in Form von Verdrehspielen und auf die Last wirkenden, schnell sperrenden Richtungssperren ohne Angabe der Sperrichtung sind demnach nicht geeignet, den Anlauf von Synchronmotoren zu gewährleisten, wenn die Lastreibung größer ist als das kritische Klebemoment. Es können immer Situationen auftreten, bei denen der Rotor nicht anläuft.

Das gleiche gilt bei der Anordnung nach der DE-GmS 87 03 451 und bei der GB-PS 14 13 782.

Es ist Aufgabe der Erfindung, den Anlauf eines durch einen Einphasensynchronmotor angetriebenen Gerätes, bei welchem die beim Anlaufen wirksamen Reibungsmomente in der Parallelstellung größer sind als das kritische Klebemoment, sicherzustellen auf konstruktiv einfache Weise.

Die Erfindung geht dabei von der für den Fachmann neuen Erkenntnis aus, daß, auch wenn die positive Lastdrehrichtung gesperrt ist und der Rotor beim Auslaufen zunächst mit der negativen Rotorspielwand an der negativen Lastspielwand anliegend unter einem Winkel zum Statorfeld stehen geblieben ist, beim Wieder-Einschalten der Spannung in einem ungünstigen Momentanwert des sinusförmigen Spannungsverlaufes die positive Rotorspielwand an die positive Lastspielwand gelangen kann. Befindet sich die positive Lastspielwand in diesem Augenblick in einer Position, in welcher der Rotor bei an ihr anliegender positiver Rotorspielwand im Parallelstand ist, so kann er dann dort stehen und hängen bleiben. Das gilt besonders für den Fall, wenn die Spielwände von Rotor und Last sanft in Kontakt kommen. Wenn die positive Richtung mit einer schnell packenden Ratschsperre gesperrt wird, ist die Gefahr des Hängenbleibens im Parallelstand besonders groß, weil aufgrund der komplizierten Anlaufdynamik mit ihrem Zusammenspiel von Klebemoment, Strommoment und Massenmoment die kritische Situation eines Rotorstillstandes in Parallelstellung häufiger auftreten kann, weil die positive Lastspielwand nicht in positiver Richtung bewegt werden kann. Ein Losschlagen in positiver Richtung ist dann nicht möglich.

Die gestellte Aufgabe ist erfindungsgemäß gelöst durch sechs Ausführungsformen.

Nach einer ersten Ausführungsform ist vorgesehen, daß
- bei Belastungen, bei denen das kritische Klebemoment kleiner ist als das beim Aus laufen oder Anlaufen im Parallelstand wirksame Lastmoment, eine von der Stellung des Rotors abhängig eingreifende Richtungssperre vorgesehen ist, die auf den Rotor ohne Mitwirkung des über Verdrehspiel gekoppelten lastseitigen Bauteils in den um 180° versetzten Drehstellungen des Rotors eingreift und die positive Drehrichtung sperrt, in welcher die Magnetisierungsrichtung des Rotors einen negativen Blockierwinkel K mit der Statorfeldrichtung einschließt, die dem Betrage nach größer ist als der Asymmetriewinkel γ und in den anderen Rotorstellungen die Rotordrehung nicht behindert,
- der Spielwinkel ε größer ist als der Betrag des Blockierwinkels K,
- der Quotient aus Lastreibungsmoment und Lastträgheitsmoment größer ist als der Quotient aus der Klebemomentamplitude und dem Rotorträgheitsmoment.

Wenn der Quotient aus Lastreibung und Lastträgheitsmoment genügend groß ist, wird vermieden, daß die positive Rotorspielwand beim Auslaufen aus der negativen Drehrichtung durch Schieben der Last an der positiven Lastspielwand zur Ruhe kommt.

Damit wird gewährleistet, daß der Rotor, wenn er beim Auslaufen aus der negativen Drehrichtung heraus, mit der negativen Rotorspielwand an der negativen Lastspielwand anliegend in der Parallelstellung zum Stillstand kommt, doch anlaufen kann, auch dann, wenn die Lastreibung größer ist als das kritische Klebemoment. Der Rotor kann in diesem Falle die durch das Klebemoment vorgegebene Ruhelage einnehmen, indem er sich unter Ausnutzung des Spiels in die positive Drehrichtung von der negativen Lastspielwand weg bewegt.

Bleibt beim Auslaufen die positive Lastspielwand so stehen, daß bei an ihr anliegender positiver Rotorspielwand der Rotor sich im Parallelstand befände, so wird der beim Auslaufen aus der negataiven Drehrichtung heraus mit seiner negativen Rotorspielwand an der negativen Lastspielwand anliegende Rotor durch das Eingreifen der auf den Rotor wirkenden Sperre daran gehindert, beim erneuten Einschalten der Spannung in positiver Drehrichtung mit seiner positiven Rotorspielwand an die positive Lastspielwand und damit in den Parallelstand zu gelangen, und zwar dann, wenn der Spielwinkel ε größer ist als der Blockierwinkel K. Ein Hängenbleiben des Rotors im Parallelstand wird dadurch vermieden.

Eine spezielle Ausführung ist dadurch gekennzeichnet, daß der Spielwinkel ε größer als 90° vermindert um den Asymmetriewinkel γ vorzugsweise 120° bis 140° ist. Wenn der Spielwinkel größer ist als 90° - γ, dann drückt das Klebemoment die negative Rotorspielwand bei der beschriebenen Position der positiven Lastspielwand gegen die negative Lastspielwand; es ist vorteilhaft, wenn die Sperre den Rotor in einer Stellung abfängt, die um einen Blockierwinkel K gegenüber dem Parallelstand versetzt ist, welcher dem Betrag nach größer ist als γ und in positiver Drehrichtung gesehen vor dem Parallelstand liegt. Beträgt der Spielwinkel ε etwa 120° bis 140°, dann beträgt der Blockierwinkel K etwa -90°. In diesem Fall erfolgt die Sperrung des Rotors, wenn seine Magnetisierungsrichtung etwa senkrecht zum Statorfeld verläuft und das Anlaufmoment maximal ist. Damit ist der Anlauf gesichert, solange das Motormoment größer ist als das Lastmoment. Das kritische Klebemoment ist dann gegenüber den bekannten Anlaufhilfen ohne Bedeutung. Die zweite Sperrstellung liegt dann um 180° zu -90° versetzt bei +90°.

Nach einer weiteren Ausgestaltung der ersten Ausführungsform ist vorgesehen, daß die Richtungssperre aus einem gehäuseseitig beweglich gelagerten Sperrglied und zwei Sperrnasen besteht, die verdrehfest mit dem Rotor verbunden sind, und daß das Verdrehspiel gebildet wird von einem auf der Rotorwelle ausgeformten oder als getrenntes Bauelement fest mit ihm verbundenen Mitnahmeteil mit seitlich nach außen hervorspringenden Antriebsnocken mit in etwa radial verlaufenden positiven und negativen Rotorspielwänden und einem auf der Last befindlichen Formteil, welches das Mitnahmeteil umgreift mit nach innen vorspringenden Lastnocken mit in etwa radial verlaufenden positiven und negativen Lastspielwänden, wobei der freie Drehraum zwischen den nach außen und nach innen vorspringenden Nocken gleich dem Spielwinkel ε ist.

Die negativen Last- und Rotorspielwände sind diejenigen, die bei Betrieb in negativer Drehrichtung des Rotors anliegen, die positiven Last- und Rotorspielwände liegen an, wenn der Rotor das Spiel in positiver Richtung durchlaufen hat. Diese Definition gilt auch für die weiter unten beschriebenen Anordnungen mit Getriebe, bei denen die Spielmittel auf der zweiten Getriebestufe angebracht sind, deren Umdrehungsrichtung umgekehrt ist wie die des Rotors. Die Benennung der Spielwände bezieht sich immer auf die Rotordrehrichtung.

Eine zweite Ausführungsform ist dadurch gekennzeichnet, daß
- auf der fest mit dem Rotor verbundenen Rotorwelle ein Antriebsritzel vorgesehen ist, das mit einem Getriebezahnrad kämmt, welches zum Antriebsritzel ein ganzzahliges Untersetzungsverhältnis aufweist,
- am Getriebezahnrad ein Mitnahmeteil mit seitlich nach innen hervorspringenden Antriebsnocken mit positiven und negativen Rotorspielwänden vorgesehen ist, das mit auf einer Lastwelle vorgesehenen Lastnocken mit Lastspielwänden zusammenwirkt,
- am Getriebezahnrad eine dem 2-fachen des Untersetzungsverhältnisses entsprechende Zahl von Sperrnasen angebracht ist, welche im Zusammenwirken mit einem gehäuseseitig gelagerten Sperrglied abhängig von der Stellung des Getriebezahnrades und damit direkt abhängig von der Rotorstellung die positive Drehrichtung des Rotors in einer Drehstellung sperren, in welcher die Magnetisierungsrichtung des Rotors einen negativen Blockierwinkel K mit der Statorfeldrichtung einschließt, der dem Betrage nach größer ist als der Asymmetriewinkel γ und in den anderen Rotorstellungen die Rotordrehung nicht behindern,
- zwischen den mit dem auf dem Getriebezahnrad angebrachten Mitnahmeteil angebrachten Rotorspielwänden und den Lastspielwänden der auf der Lastwelle angeordneten Lastnocken ein Spielwinkel ε vorgesehen ist, welcher dem Rotor eine freie Umdrehung erlaubt, die größer ist als der Betrag des Blockierwinkels K, vorzugsweise größer als 90° - γ,
- der Quotient aus Lastreibungsmoment und Lastträgheitsmoment größer ist als der Quotient aus der Klebemomentamplitude und dem Rotorträgheitsmoment.

In Umkehrung dieser Konstellation ist bei einer dritten Ausführungsform vorgesehen, daß
- auf der fest mit dem Rotor verbundenen Rotorwelle ein Antriebsritzel vorgesehen ist, das mit einem Getriebezahnrad kämmt, welches zum Antriebsritzel ein ganzzahliges Untersetzungsverhältnis aufweist,
- am Getriebezahnrad ein Mitnahmeteil mit seitlich nach innen hervorspringenden Antriebsnocken mit den positiven und negativen Rotorspielwänden vorgesehen ist, das mit Lastnocken, die mit Lastspielwänden auf einer Lastwelle vorgesehen sind, zusammenwirken,
- am Gehäuse eine dem Untersetzungsverhältnis entsprechende Zahl von Sperrgliedern drehbar gelagert ist, welche im Zusammenwirken mit zwei am Getriebezahnrad symmetrisch angeordneten Sperrnasen abhängig von der Stellung des Getriebezahnrades und damit direkt abhängig von der Rotorstellung die positive Drehrichtung des Rotors in einer Drehstellung sperren, in welcher die Magnetisierungsrichtung des Rotors einen negativen Blockierwinkel K mit der Statorfeldrichtung einschließt, der dem Betrage nach größer ist als der Asymmetriewinkel γ und in den anderen Rotorstellungen die Rotordrehung nicht verhindern,
- zwischen dem auf dem Getriebezahnrad angebrachten Mitnahmeteil angebrachten Rotorspielwänden und den Lastspielwänden der auf der Lastwelle angeordneten Lastnocken ein Spielwinkel ε vorgesehen ist, welcher dem Rotor eine freie Umdrehung erlaubt, die größer ist als der Betrag des Blockierwinkels K, vorzugsweise größer als 90° - γ,
- der Quotient aus Lastreibungsmoment und Lastträgheitsmoment größer ist als der Quotient aus der Klebemomentamplitude und dem Rotorträgheitsmoment.

Diese Ausführungsformen bringen konstruktive Vorteile bei reduzierter Bauhöhe. Die Sperrmittel können außerdem an anordnungsmäßig günstiger Stelle vorgesehen sein.

Nach einer vierten Ausführungsform der Erfindung ist vorgesehen, daß
- auf der fest mit dem Rotor verbundenen Rotorwelle ein Antriebsritzel vorgesehen ist, das mit einem Getriebezahnrad kämmt, welches zum Antriebsritzel ein ganzzahliges Untersetzungsverhältnis aufweist,
- am Getriebezahnrad ein Mitnahmeteil mit einem oder mehreren seitlich nach innen hervorspringenden Antriebsnocken mit den positiven und negativen Rotorspielwänden vorgesehen ist, das mit mindestens einem Lastnocken mit Lastspielwänden auf einer Lastwelle zusammenwirkt,
- auf dem Getriebezahnrad ein Element mit einer oder mehreren gleichmäßig über seinen Umfang verteilten Sperrnasen vorgesehen ist, die mit einem Sperrglied mit Sperrstift zusammenwirken,
- der Spielwinkel ε zwischen den Antriebsnocken und den Lastnocken etwa gleich 360° geteilt durch die Anzahl der Sperrnasen ist, welche abhängig von der Stellung des Getriebezahnrades und damit direkt abhängig von der Rotorstellung die positive Drehrichtung des Rotors in einer Drehstellung sperren, in welcher die Magnetisierungsrichtung des Rotors einen negativen Blockierwinkel K mit der Statorfeldrichtung einschließt, der dem Betrage nach größer ist als der Asymmetriewinkel γ und vorzugsweise 90° beträgt, und in den anderen Rotorstellungen die Rotordrehung nicht behindern,
- der Quotient aus Lastreibungsmoment und Lastträgheitsmoment größer ist als der Quotient aus der Klebemomentamplitude und dem Rotorträgheitsmoment.

Die Verwendung von nur wenigen Sperrnasen bietet konstruktive Vorteile.

Nach einer fünften Ausführungsform der Erfindung ist vorgesehen, daß
- auf der fest mit dem Rotor verbundenen Rotorwelle ein Antriebsritzel vorgesehen ist, das mit einem Getriebezahnrad kämmt, welches zum Antriebsritzel ein ganzzahliges Untersetzungsverhältnis aufweist,
- an dem Getriebezahnrad wenigstens eine bogenförmige Bewegungsbahn mit die Spielbewegung begrenzenden Rotorspielwänden vorgesehen ist,
- die Bewegungsbahn zwischen den Rotorspielwänden von wenigstens einem mit der Last gekoppelten Lastnocken mit Lastspielwänden abgefahren wird,
- fest auf dem Getriebeszahnrad zwei Sperrnasen angebracht sind, die mit einem gehäuseseitig gelagerten Sperrglied das Getriebezahnrad bei positiver Drehrichtung des Rotors in einer Position sperren, in der die Rotormagnetisierungsrichtung mit der Statorfeldrichtung einen positiven oder negativen Blockierwinkel K von ca. 90° einschließt und in den anderen Rotorstellungen die Rotordrehung nicht behindert,
- der freie Bewegungsraum des Lastnockens längs der Bewegungsbahn einen Bewegungsspielwinkel ε von etwa 180° aufweist,
- der Quotient aus Lastreibungsmoment und Lastträgheitsmoment größer ist als der Quotient aus der Klebemomentamplitude und dem Rotorträgheitsmoment.

In konstruktiver Abwandlung der fünften Ausführungsform kann eine sechste Ausführungsform so gestaltet sein, daß
- auf der fest mit dem Rotor verbundenen Rotorwelle ein Antriebsritzel vorgesehen ist, das mit einem Getriebezahnrad kämmt, welches zum Antriebsritzel ein ganzzahliges Untersetzungsverhältnis aufweist,
- auf dem Getriebezahnrad wenigstens ein Antriebsnocken mit Rotorspielwänden vorgesehen ist, der mit wenigstens einer Lastspielwände aufweisenden Bewegungsbahn auf der Lastseite zusammenwirkt,
- fest auf dem Getriebezahnrad zwei Sperrnasen angebracht sind, die mit einem gehäuseseitig gelagerten Sperrglied das Getriebezahnrad bei positiver Drehrichtung des Rotors in einer Position sperren, in der die Rotormagnetisierungsrichtung mit der Statorfeldrichtung einen positiven oder negativen Blockierwinkel K von ca. 90° einschließt und in den anderen Rotorstellungen die Rotordrehung nicht behindert,
- der freie Bewegungsraum des Antriebsnockens längs der Bewegungsbahn einen Bewegungsspielwinkel ε von etwa 180° aufweist,
- der Quotient aus Lastreibungsmoment und Lastträgheitsmoment größer ist als der Quotient aus der Klebemomentamplitude und dem Rotorträgheitsmoment.

Für die fünfte und sechste Ausführungsform gilt, daß sie kompakt ausgebildet sind und sich für die synchronmotorgetriebenen kleinen Haushaltsgeräte besonders eignen.

Nach einer weiteren Ausgestaltung der fünften und sechsten Ausführungsform ist vorgesehen, daß das Untersetzungsverhältnis 1:4 beträgt und bei Parallelstellung des Rotors bei anliegenden negativen Rotor- und Lastspielwänden der Sperrwinkel K', das ist der freie Winkel, den die auf dem Getriebeszahnrad angebrachten Sperrnasen zurücklegen können, bei negativer Drehrichtung des Getriebezahnrades, bevor eine von ihnen gegen das Sperrglied schlägt, einen Betrag von ca. 22,5° aufweist, und daß die Bewegungsbahn eine Nut ist und die Spielwände der Bewegungsbahn die Nutenden sind. Damit lassen sich besonders gut Geräte der persönlichen Versorgung antreiben, wie beispielsweise Epiliergeräte, bei denen es auf einen kompakten Aufbau und ein robustes Verhalten und auf Toleranzunempfindlichkeit ankommt.

Nach einer weiteren Ausgestaltung der fünften und sechsten Ausführungsform ist vorgesehen, daß bei der Verwendung von mehr als einer Bewegungsbahn, die jede mit einem Lastnocken zusammenwirken, die Bahnen auf verschiedenen Radien angeordnet verlaufen zur Erzielung eines größeren Spielwinkels. Hierdurch läßt sich die Übertragung der Last gut verteilen.

Die Erfindung wird anhand der Zeichnungen näher erläutert. Es zeigen:
Fig. 1 eine schaubildliche Darstellung einer ersten Ausführungsform einer von einem Synchronmotor angetriebenen Lastwelle mit Anlaufhilfe,
Fig. 2 eine schematische Draufsicht auf die Anordnung der Anlaufhilfe nach Fig. 1 zur Erläuterung der Funktionsweise,
Fig. 3 eine schaubildliche Darstellung einer zweiten Ausführungsform der Anlaufhilfe unter Verwendung eines Getriebes mit einer Vielzahl von Sperrnasen,
Fig. 4 eine fünfte Ausführungsform der Anlaufhilfe in Draufsicht unter Verwendung eines Getriebes mit nur zwei Sperrnasen und vergrößertem Spiel,
Fig. 4a eine schaubildliche Darstellung einer sechsten Ausführungsform, bei der abweichend von der fünften Ausführungsform Nocken und Bewegungsbahn rotor- und lastseitig vertauscht sind; der Antriebsmotor ist hier nicht normal dargestellt,
Fig. 5 eine gegenüber der Darstellung nach Fig. 4 abgewandelte Anlaufhilfe in Draufsicht mit zwei getrennten Bewegungsbahnen und Lastnocken, die auf zwei verschiedenen, unterschiedlichen Radien angeordnet sind.

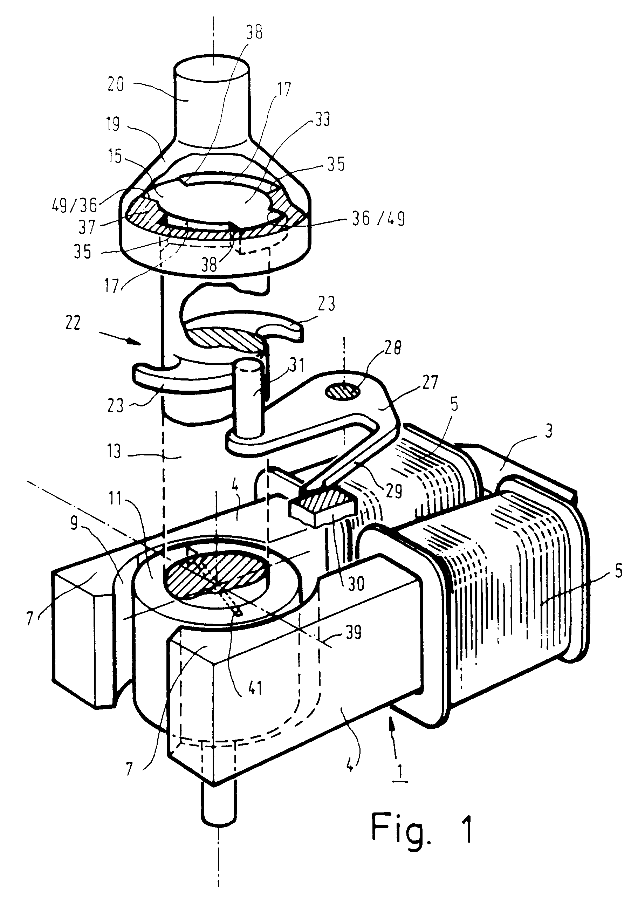

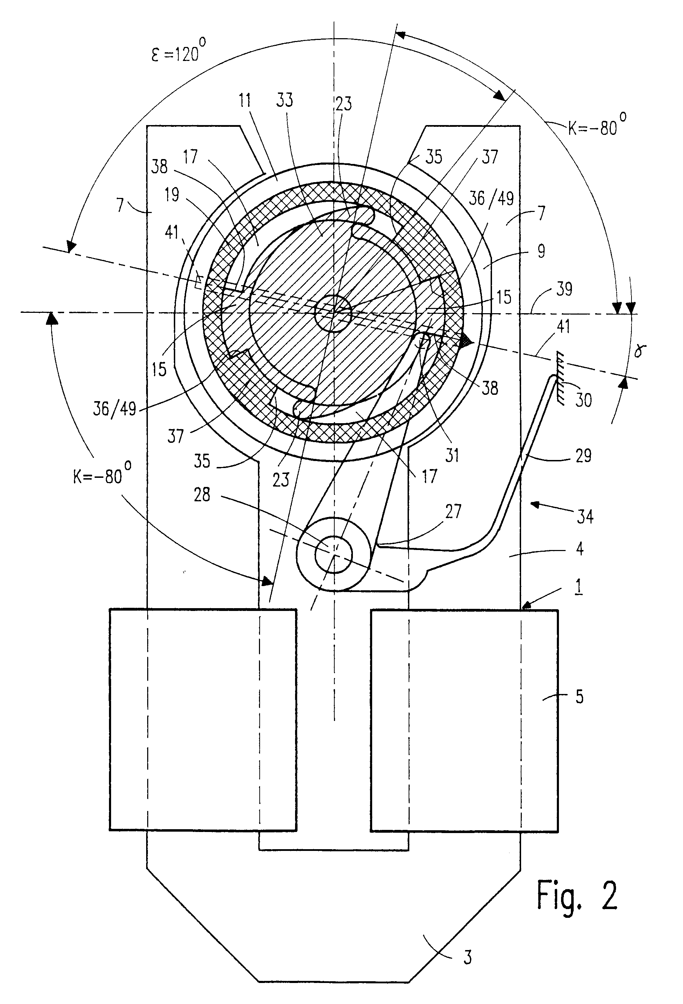

In Fig. 1 und 2 ist ein zweipoliger Einphasensynchronmotor 1 dargestellt, dessen U-förmiges Statoreisen 3 zwei Schenkel 4 mit Spulen 5 aufweist. An den Schenkeln 4 sind Polschuhe 7 ausgebildet, zwischen denen in einem Statorfeld 9 ein dauermagnetischer Rotor 11 mittels eine Welle 13 umlauffähig gelagert ist.

Die Rotorwelle 13 ist mit Antriebsnocken 15 versehen, die in Kupplungsnuten 17 eines Lastteiles 19 eingreifen, von dem eine Lastwelle 20 wegführt. Die Kupplungsnuten 17 haben eine später noch definierte Länge, die es den Antriebsnocken 15 möglich macht, um einen gewissen Spielwinkel ε frei drehen zu können (Fig. 2). Auf diese Weise wird ein Verdrehspiel zwischen dem Lastteil 19 und der Rotorwelle 13 eingeführt.

An der Rotorwelle 13 sind zwei Sperrnasen 23 vorgesehen. Die Sperrnasen 23 wirken zusammen mit einem Sperrglied 27, das um eine chassisfeste Lagerung 28 drehbar ist. Das Sperrglied 27 weist einen Federarm 29 auf, der sich an einem chassisfesten Widerlager 30 abstützt. Das Sperrglied 27 trägt einen Sperrstift 31, der zum Zusammenwirken mit den Sperrnasen 23 ausgebildet ist. Der Federarm 29 drückt dazu das Sperrglied und mit ihm den Sperrstift 31 ständig in Richtung auf die Rotorwelle 13. In besonders einfacher Ausbildung bestehen das Sperrglied 27, der Sperrstift 31, der Federarm 29 und das Widerlager 30 aus einem Kunststoffspritzteil.

Fig. 2 zeigt den Aufbau nach Fig. 1 in Draufsicht, wobei wieder der Einphasensynchronmotor 1 mit seinem U-förmigen Statoreisen 3, den Schenkeln 4, den Spulen 5 sowie den Statorpolen 7 zu erkennen ist, wobei im Statorfeld 9 der Rotor 11 angeordnet ist. Mit dem Rotor 11 fest verbunden ist ein Mitnehmerteil 33, welches die Antriebssnocken 15 trägt. Das Mitnehmerteil 33 ist in der Zeichnung schraffiert dargestellt. Unterhalb des Mitnehmerteiles liegen die mit dem Mitnehmerteil verbunden Sperrnasen 23.

Um das Mitnehmerteil 33 herum liegt das Lastteil 19 mit den Kupplungsnuten 17. Die Kupplungsnuten 17 stellen Bewegungsbahnen dar, deren Länge begrenzt wird von positiven und negativen Lastspielwänden 35, 36, die sich an vom Lastteil 19 nach innen weisenden Lastnocken 37 ausbilden. In den Bewegungsbahnen bzw. Kupplungsnuten 17 befinden sich die Antriebsnocken 15 mit positiven und negativen Rotorspielwänden 38, 49. Das Lastteil 19 mit den Lastnocken 37 ist der Übersichtlichkeit wegen doppelt schraffiert dargestellt.

In der Zeichnung erkennt man auch das um die chassisfeste Lagerung 28 verschwenkbare Sperrglied 27 mit seinem Federarm 29 und chassifestem Widerlager 30. Die vordere Spitze des Sperrgliedes 27 trägt den Sperrstift 31.

Wie man aus Fig. 2 erkennt, schließen die mittlere Feldrichtung 39 des Statorfeldes 9 und die mittlere Feldrichtung 41 des zweipolig magnetisierten Rotors 11 einen Asymmetriewinkel γ ein. Dies ist der Winkel, um den sich der Rotor aufgrund des Klebemomentes beim Stillstand aus der Richtung 39 des Statorfeldes heraus verstellt. In Richtung der Linie 41 bleibt der Rotor, wenn er sich frei bewegen kann, nach dem Auslauf in einer stabilen Ruhelage stehen.

Der Spielwinkel ε bezeichnet den Winkel, um den sich das Mitnehmerteil 33 frei gegenüber dem Lastteil 19 verschieben kann ohne Berücksichtigung des Sperrgliedes 27. Der Spielwinkel ε wird bestimmt durch den freien Abstand der Lastspielwände 35/36 der Kupplungsnuten 17 abzüglich der Breite des Antriebsnockens 15 mit den Rotorspielwänden 38/49. Eingetragen ist ferner der Blockierwinkel K; er bezeichnet den Winkel zwischen Statorfeldrichtung 39 und Magnetisierungsrichtung 41, unter welchem der Rotor bei positiver Drehrichtung vor Erreichen des Parallelstandes beider Felder gesperrt wird. Der Spielwinkel ε muß größer sein als der Betrag des Blockierwinkels K, damit der Rotor 11 beim Zurücklaufen des mit ihm fest verbundenen Antriebsnockens 15 aus der Anlage seiner negativen Rotorspielwand 49 an der negativen Lastspielwand 36 des Rastnockens gesperrt wird, bevor die positive Rotorspielwand 38 des Antriebsnockens die positive Lastspielwand 35 des Lastnockens erreicht, wenn diese sich in einer Stellung befindet, in welcher bei anliegenden positiven Last- und Rotorspielwänden 35, 38 die Magnetisierungsrichtung 41 des Rotors 11 parallel zur Statorfeldrichtung 39 wäre. Der Sperrpunkt sollte wenigstens um den Betrag des Asymmetriewinkels γ vor Erreichen der Parallelstellung liegen.

Um zu vermeiden, daß beim Abschalten der Spannung der Rotor von der Last geschoben wird und somit die positiven Rotor- und Lastspielwände beim Auslaufen in Kontakt kämen, muß der Quotient aus Lastreibungsmoment und Lastträgheitsmoment größer sein als der Quotient aus Klebe- und Rotorträgheitsmoment.

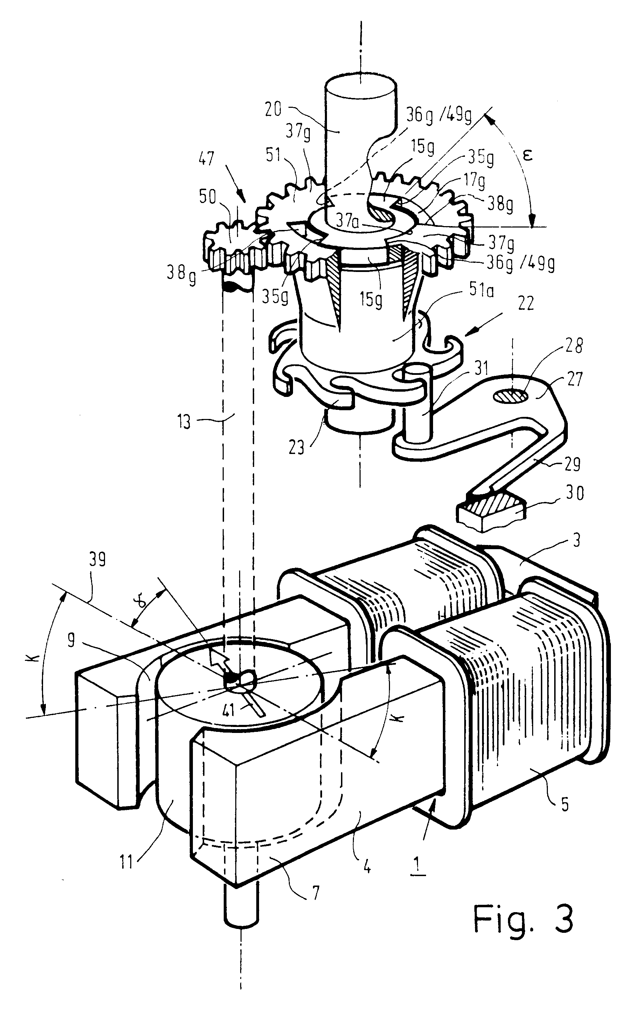

Fig. 3 zeigt eine zweite Ausführungsform, bei der die Richtungssperre 22 an einem Getriebe zwischen der Rotorwelle 13 und der Lastwelle 20 angeordnet ist. Die schaubildliche Darstellung nach Fig. 3 zeigt wieder den Einphasensynchronmotor 1 in einer Ausführungsform entsprechend der nach Fig. 1. Auf der Rotorwelle 13 ist ein Ritzel 50 angeordnet, welches mit einem Getriebezahnrad 51 kämmt und damit ein Getriebe 47 bildet. In dem Getriebezahnrad 51 ist ein zylindrischer Freiraum vorgesehen, in den nach innen Antriebsnocken 37g hineingreifen. Damit bilden sich zwischen den Nocken 37g bogenförmige Bewegungsbahnen 17g aus, die begrenzt werden von Rotorspielwänden, nämlich einer positiven Rotorspielwand 38g und einer negativen Rotorspielwand 49g.

Durch das Getriebezahnrad 51 ist die Lastwelle 20 geführt. An der Lastwelle 20 sind Nocken 15g befestigt, die seitliche Spielwände aufweisen, nämlich eine positive Lastspielwand 35g und eine negative Lastspielwand 36g. Diese Lastnocken greifen in die Bewegungsbahnen 17g ein.

Da die Lastnocken 15g schmäler sind als die Bewegungsbahnen 17g, entsteht zwischen den Lastnocken 15g und den Bewegungsbahnen 17g ein Spielwinkel ε.

Das Getriebezahnrad 51 ist mit mehreren Sperrnasen 23 versehen, die an einer axialen Verlängerung 51a des Antriebszahnrades 51 angeordnet sind. Wie in der Ausführungsform nach den Fig. 1 und 2, bilden die Sperrnasen 23 zusammen mit einem Sperrstift 31 eine Richtungssperre 22. Der Sperrstift 31 ist an einem um eine chassisfeste Lagerung 28 verschwenkbaren Sperrglied 27 befestigt, das sich mit einem Federarm 29 am chassisfesten Widerlager 30 abstützt.

Bei der Ausführungsform nach Fig. 3 ist vorgesehen, daß verdrehfest mit dem Rotor 11 über die Rotorwelle 13 das Antriebsritzel 50 antreibbar ist, das mit dem Getriebezahnrad 51 kämmt, welches zum Antriebsritzel 50 ein ganzzahliges Untersetzungsverhältnis aufweist. Der Spielwinkel ε zwischen dem Getriebezahnrad 51 und der Lastwelle 20 erlaubt dem Rotor eine freie Umdrehung, die größer ist als der Blockierwinkel K, vorzugsweise größer als 90° minus dem Asymmetriewinkel γ. Am Getriebezahnrad 51 ist eine dem 2-fachen des Untersetzungsverhältnisses entsprechende Zahl von Sperrnasen 23 angebracht, welche abhängig von der Stellung des Getriebezahnrades 51 und damit direkt abhängig von der Rotorstellung die positive Drehrichtung des Rotors 11 in der Drehstellung sperren, in welcher die Magnetisierungsrichtung des Rotors 11 einen negativen Blockierwinkel K mit der Statorfeldrichtung 39 einschließt, der dem Betrage nach größer ist als der Asymmetriewinkel γ.

Abweichend von der zweiten Ausführungsform nach Fig. 3 ist bei einer nicht dargestellten dritten Ausführungsform vorgesehen, daß am Getriebezahnrad 51 eine dem Untersetzungsverhältnis entsprechende Zahl von Sperrgliedern 27 drehbar gelagert ist, welche im Zusammenwirken mit zwei am Getriebezahnrad 51 symmetrisch angeordneten Sperrnasen abhängig von der Stellung des Getriebezahnrades 51 und damit direkt abhängig von der Rotorstellung die positive Drehrichtung des Rotors in einer Drehstellung sperren, in welcher die Magnetisierungsrichtung 41 des Rotors 11 einen negativen Blockierwinkel K mit der Statorfeldrichtung 39 einschließt, der dem Betrage nach größer ist als der Asymmetriewinkel γ und in den anderen Rotorstellungen die Rotordrehung nicht behindert.

Bei einer weiteren, nicht dargestellten vierten Ausführungsform ist, basierend auf der zweiten Ausführungsform mit dem Getriebe, vorgesehen, daß der Spielwinkel ε zwischen den Antriebsnocken 37g und den Lastnocken 15g etwa gleich 360° geteilt durch die Anzahl der Sperrnasen 23 ist, welche abhängig von der Stellung des Getriebezahnrades 51 und damit direkt abhängig von der Rotorstellung die positive Drehrichtung des Rotors 11 in einer Drehstellung sperren, in welcher die Magnetisierungsrichtung 41 des Rotors 11 einen negativen Sperrwinkel K mit der Statorfeldrichtung 39 einschließt, der dem Betrage nach größer ist als der Asymmetriewinkel γ und vorzugsweise -90° beträgt, und in den anderen Rotorstellungen die Rotordrehung nicht behindert.

Je nach dem Untersetzungsverhältnis und der Anzahl der Sperrnasen bzw. Sperrglieder kann der Rotor 11 mehrere Umdrehungen in positiver Drehrichtung zurücklaufen, bevor er in der beschriebenen Stellung etwa senkrecht zum Statorfeld gesperrt wird.

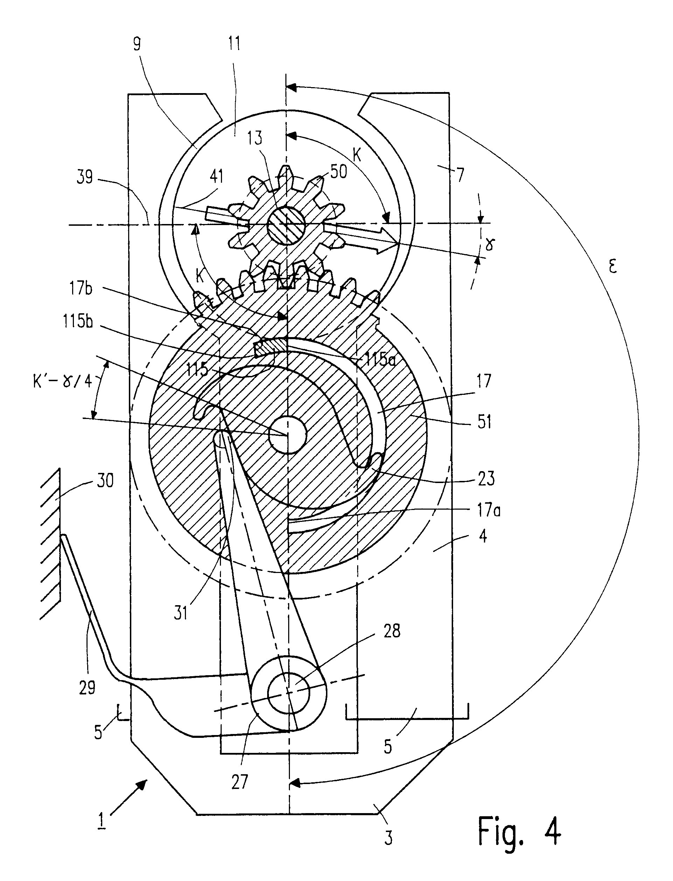

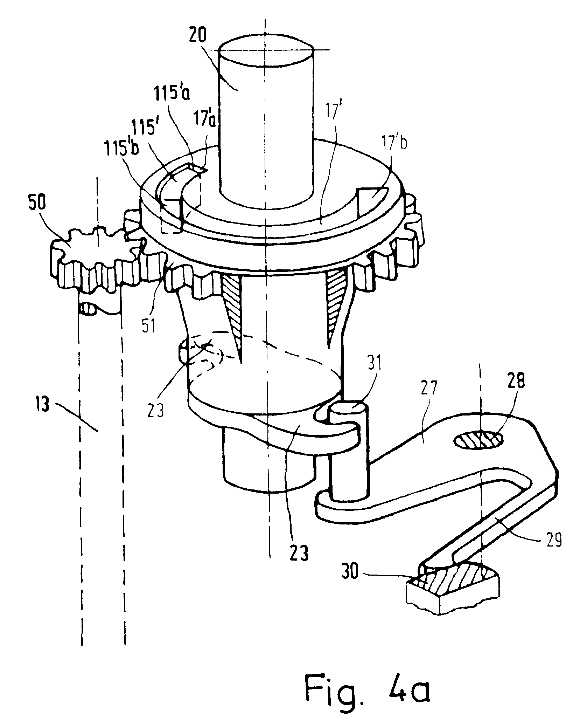

Abweichend von der Ausführungsform nach Fig. 3, bei der eine Vielzahl von Sperrnasen 23 fest mit dem Getriebezahnrad 51 verbunden sind, ist bei einer fünften Ausführungsform nach Fig. 4 vorgesehen, daß am Getriebezahnrad 51 eine bogenförmige Bewegungsbahn 17 angeordnet ist mit Spielwänden 17a und 17b, in die ein Nocken 115 der Lastwelle 20 eingreift. Auf dem Getriebezahnrad 51 sind nur zwei symmetrisch angeordnete Sperrnasen 23 vorgesehen. Der Spielwinkel ε beträgt in diesem Falle 180°, und der Blockierwinkel K bemißt sich auf -90°.

Fig. 4a zeigt eine sechste Ausführungsform ähnlich der nach Fig. 4, wobei nur die Anlaufhilfe ohne Antriebsmotor dargestellt ist. Dabei ist abweichend von der fünften Ausführungsform nach Fig. 4 am Getriebezahnrad 51 statt der bogenförmigen Bewegungsbahn ein Antriebsnocken 115' mit Rotorspielwänden 115'a, 115'b und auf der Lastwelle 20 anstelle des Lastnockens eine bogenförmige Bewegungsbahn 17' mit Lastspielwänden 17'a, 17'b vorgesehen.

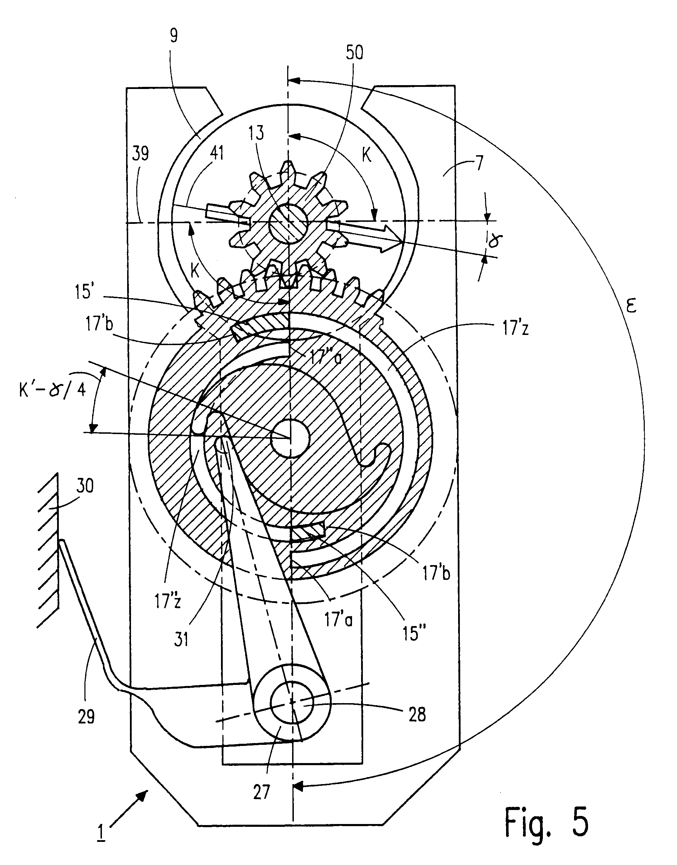

Fig. 5 zeigt eine abgewandelte Anlaufhilfe ähnlich der nach Fig. 4, wobei für gleiche Teile gleiche Bezugszeichen verwendet wurden. In Fig. 5 sind zwei Bewegungsbahnen 17', 17'' vorgesehen, die jede mit einem Nocken 15', 15'' zusammenwirken. Die Bewegungsbahnen 17', 17'' sind dabei zur Erzielung eines größeren Spielwinkels auf verschiedenen Radien angeordnet und in Umfangsrichtung um 180° gegeneinander versetzt. Der Spielwinkel ε beträgt wiederum 180°, der Blockierwinkel K beterägt -90°.

Alle funktionellen Umkehrungen der Bewegungsbahnen und Nocken sind in den Rahmen der Erfindung mit einbezogen.

## Patentansprüche

1. Anlaufhilfe für einen zweipoligen Einphasensynchronmotor mit dauermagnetischem Rotor (11) und einem magnetischen Klebemoment, welches über eine Umdrehung gesehen positive und negative Werte hat mit sich daraus ergebenden stabilen und labilen Ruhelagen, wobei die stabilen Ruhelagen um den Asymmetriewinkel γ in positiver Richtung gegenüber der mittleren Feldrichtung (39) des Statorfeldes (9) versetzt sind und ein kritisches Klebemoment Mₖₗₖᵣ im Parallelstand von Statorfeld (9) und Rotorfeld (41) wirksam ist, bestehend aus einem Verdrehspiel zwischen einem mit dem Rotor (11) verbundenen Mitnahmeteil und einem Lastteil sowie einer Richtungssperre (22), wobei der Spielwinkel ε des Verdrehspiels zwischen den lastseitigen und rotorseitigen Bauteilen, um den die Bauteile sich gegeneinander entkuppelt verdrehen können, in positiver und negativer Drehrichtung begrenzt ist mittels positiven und negativen Spielwänden der Bauteile, dadurch gekennzeichnet, daß
- bei Belastungen, bei denen das kritische Klebemoment kleiner ist als das beim Auslaufen oder Anlaufen im Parallelstand wirksame Lastmoment, eine von der Stellung des Rotors (11) abhängig eingreifende Richtungssperre (22) vorgesehen ist, die auf den Rotor (11) ohne Mitwirkung des über Verdrehspiel gekoppelten lastseitigen Bauteils (19) in den um 180° versetzten Drehstellungen des Rotors eingreift und die positive Drehrichtungen sperrt, in welcher die Magnetisierungsrichtung (41) des Rotors (11) einen negativen Blockierwinkel K mit der Statorfeldrichtung (39) einschließt, der dem Betrage nach größer ist als der Asymmetriewinkel γ und in den anderen Rotorstellungen die Rotordrehung nicht behindert,
- der Spielwinkel ε größer ist als der Betrag des Blockierwinkels K,
- der Quotient aus Lastreibungsmoment und Lastträgheitsmoment größer ist als der Quotient aus der Klebemomentamplitude und dem Rotorträgheitsmoment.

2. Anlaufhilfe nach Anspruch 1, dadurch gekennzeichnet, daß der Spielwinkel ε größer als 90° vermindert um den Asymmetriewinkel γ, vorzugsweise 120° bis 140° ist.

3. Anlaufhilfe nach Anspruch 1 oder 2, dadurch gekennzeichnet, daß die Richtungssperre (22) aus einem gehäuseseitig beweglich gelagerten Sperrglied (27) und zwei Sperrnasen (23) besteht, die verdrehfest mit dem Rotor (11) verbunden sind, und daß das Verdrehspiel gebildet wird von einem auf der Rotorwelle (13) ausgeformten oder als getrenntes Bauelement fest mit ihm verbundenen Mitnahmeteil (33) mit seitlich nach außen hervorspringenden Antriebsnocken (15) mit in etwa radial verlaufenden positiven und negativen Rotorspielwänden (38, 49) und einem auf der Last befindlichen zweiten Formteil (19), welches das Mitnehmerteil (33) umgreift mit nach innen vorspringenden Lastnocken (37) mit in etwa radial verlaufenden positiven und negativen Lastspielwänden (35, 36), wobei der freie Drehraum zwischen den nach außen und nach innen vorspringenden Nocken (15, 37) gleich dem Spielwinkel ε ist (Fig. 1 und 2).

4. Anlaufhilfe nach dem Oberbegriff des Anspruches 1, dadurch gekennzeichnet, daß
- auf der fest mit dem Rotor (11) verbundenen Rotorwelle (13) ein Antriebsritzel (50) vorgesehen ist, das mit einem Getriebezahnrad (51) kämmt, welches zum Antriebsritzel (50) ein ganzzahliges Untersetzungsverhältnis aufweist,
- am Getriebezahnrad (51) ein Mitnehmerteil (33) mit seitlich nach innen hervorspringenden Antriebsnocken (37g) mit den positiven und negativen Rotorspielwänden (38g, 49g) vorgesehen ist, das mit auf einer Lastwelle (20) vorgesehenen Lastnocken (15g) mit Lastspielwänden (35g, 36g) zusammenwirkt,
- am Getriebezahnrad (51) eine dem 2-fachen des Untersetzungsverhältnisses entsprechende Zahl von Sperrnasen (23) angebracht ist, welche in Zusammenwirken mit einem gehäuseseitig gelagerten Sperrglied (27) abhängig von der Stellung des Getriebezahnrades (51) und damit direkt abhängig von der Rotorstellung die positive Drehrichtung des Rotors (11) in einer Drehstellung sperren, in welcher die Magnetisierungsrichtung (41) des Rotors (11) einen negativen Blockierwinkel K mit der Statorfeldrichtung (39) einschließt, der dem Betrage nach größer ist als der Asymmetriewinkel γ und in den anderen Rotorstellungen die Rotordrehung nicht behindern,
- zwischen den auf dem auf dem Getriebezahnrad (51) angebrachten Mitnehmerteil (33) angebrachten Rotorspielwänden (38g, 49g) und den Lastspielwänden (35g, 36g) der auf der Lastwelle (20) angeordneten Lastnocken (15g) ein Spielwinkel ε vorgesehen ist, welcher dem Rotor (11) eine freie Umdrehung erlaubt, die größer ist als der Betrag des Blockierwinkels K, vorzugsweise größer als 90° - γ,
- der Quotient aus Lastreibungsmoment und Lastträgheitsmoment größer ist als der Quotient aus der Klebemomentamplitude und dem Rotorträgheitsmoment (Fig. 3).

5. Anlaufhilfe nach dem Oberbegriff des Anspruches 1, dadurch gekennzeichnet, daß
- auf der fest mit dem Rotor (11) verbundenen Rotorwelle (13) ein Antriebsritzel (50) vorgesehen ist, das mit einem Getriebezahnrad (51) kämmt, welches zum Antriebsritzel (50) ein ganzzahliges Untersetzungsverhältnis aufweist,
- am Getriebezahnrad (51) ein Mitnehmerteil (33) mit seitlich nach innen hervorspringenden Antriebsnocken (37g) mit den positiven und negativen Rotorspielwänden (38g, 49g) vorgesehen ist, die mit Lastnocken (15g), die mit Lastspielwänden (35g, 36g) auf einer Lastwelle (20) vorgesehen sind, zusammenwirken,
- am Gehäuse eine dem Untersetzungsverhältnis entsprechende Zahl von Sperrgliedern (27) drehbar gelagert ist, welche im Zusammenwirken mit zwei am Getriebezahnrad (51) symmetrisch angeordneten Sperrnasen (23) abhängig von der Stellung des Getriebezahnrades (51) und damit direkt abhängig von der Rotorstellung die positive Drehrichtung des Rotors (11) in einer Drehstellung sperren, in welcher die Magnetisierungsrichtung (41) des Rotors (11) einen negativen Blockierwinkel K mit der Statorfeldrichtung (39) einschließt, der dem Betrage nach größer ist als der Asymmetriewinkel γ und in den anderen Rotorstellungen die Rotordrehung nicht behindert,
- zwischen dem auf dem Getriebezahnrad (51) angebrachten Mitnehmerteil (33) angebrachten Rotorspielwänden (38g, 49g) und den Lastspielwänden (35g, 36g) der auf der Lastwelle (20) angeordneten Lastnocken (15g) ein Spielwinkel ε vorgesehen ist, welcher dem Rotor (11) eine freie Umdrehung erlaubt, die größer ist als der Betrag des Blockierwinkels K, vorzugsweise größer als 90° - γ,
- der Quotient aus Lastreibungsmoment und Lastträgheitsmoment größer ist als der Quotient aus der Klebemomentamplitude und dem Rotorträgheitsmoment.

6. Anlaufhilfe nach dem Oberbegriff des Anspruches 1, dadurch gekennzeichnet, daß
- auf der fest mit dem Rotor (11) verbundenen Rotorwelle (13) ein Antriebsritzel (50) vorgesehen ist, das mit einem Getriebezahnrad (51) kämmt, welches zum Antriebsritzel (50) ein ganzzahliges Untersetzungsverhältnis aufweist,
- am Getriebezahnrad (51) ein Mitnehmerteil (33) mit einem oder mehreren seitlich nach innen hervorspringen Antriebsnocken (37g) mit den positiven und negativen Rotorspielwänden (38g, 49g) vorgesehen ist, das mit mindestens einem Lastnocken (15g) mit Lastspielwänden (35g, 36g) auf einer Lastwelle (20) zusammenwirkt,
- auf dem Getriebezahnrad (51) ein Element mit einer oder mehreren gleichmäßig über seinen Umfang verteilten Sperrnasen (23) vorgesehen ist, die mit einem Sperrglied (27) mit Sperrstift (31) zusammenwirken,
- der Spielwinkel ε zwischen den Antriebsnocken (37g) und den Lastnocken (15g) etwa gleich 360° geteilt durch die Anzahl der Sperrnasen (23) ist, welche abhängig von der Stellung des Getriebezahnrades (51) und damit direkt abhängig von der Rotorstellung die positive Drehrichtung des Rotors (11) in einer Drehstellung sperren, in welcher die Magnetisierungsrichtung (41) des Rotors (11) einen negativen Blockierwinkel K mit der Statorfeldrichtung (39) einschließt, der dem Betrage nach größer ist als der Asymmetriewinkel γ und vorzugsweise -90° beträgt, und in den anderen Rotorstellungen die Rotordrehung nicht behindert,
- der Quotient aus Lastreibungsmoment und Lastträgheitsmoment größer ist als der Quotient aus der Klebemomentamplitude und dem Rotorträgheitsmoment.

7. Anlaufhilfe nach dem Oberbegriff des Anspruches 1, dadurch gekennzeichnet, daß
- auf der fest mit dem Rotor (11) verbundenen Rotorwelle (13) ein Antriebsritzel (50) vorgesehen ist, das mit einem Getriebezahnrad (51) kämmt, welches zum Antriebsritzel (50) ein ganzzahliges Untersetzungsverhältnis aufweist,
- an dem Getriebezahnrad (51) wenigstens eine bogenförmige Bewegungsbahn (17) mit die Spielbewegung begrenzenden Rotorspielwänden (17a), 17b) vorgesehen ist,
- die Bewegungsbahn (17) zwischen den Rotorspielwänden (17a, 17b) von wenigstens einem mit der Last gekoppelten Lastnocken (115) mit Lastspielwänden (115a, 115b) abgefahren wird,
- fest auf dem Getriebezahnrad (51) zwei Sperrnasen (23) angebracht sind, die mit einem gehäuseseitig gelagerten Sperrglied (27) das Getriebezahnrad (51) bei positiver Drehrichtung des Rotors (11) in einer Position sperren, in der die Rotormagnetisierungsrichtung (41) mit der Statorfeldrichtung (39) einen positiven oder negativen Blockierwinkel K von ca. 90° einschließt, und in den anderen Rotorstellungen die Rotordrehung nicht behindert,
- der freie Bewegungsraum des Lastnockens (115) längs der Bewegungsbahn einen Bewegungsspielwinkel ε von etwa 180° aufweist,
- der Quotient aus Lastreibungsmoment und Lastträgheitsmoment größer ist als der Quotient aus der Klebemomentamplitude und dem Rotorträgheitsmoment (Fig.4).

8. Anlaufhilfe nach dem Oberbegriff des Anspruches 1, dadurch gekennzeichnet, daß
- auf der fest mit dem Rotor (11) verbundenen Rotorwelle (13) ein Antriebsritzel (50) vorgesehen ist, das mit einem Getriebezahnrad (51) kämmt, welches zum Antriebsritzel (50) ein ganzzahliges Untersetzungsverhältnis aufweist,
- auf dem Getriebezahnrad (51) wenigstens ein Antriebsnocken (115') mit Rotorspielwänden (115'a, 115'b) vorgesehen ist, der mit wenigstens einer Lastspielwände (17'a, 17'b) aufweisenden Bewegungsbahn (17') auf der Lastseite zusammenwirkt,
- fest auf dem Getriebezahnrad (51) zwei Sperrnasen (23) angebracht sind, die mit einem gehäuseseitig gelagerten Sperrglied (27) das Getriebezahnrad (51) bei positiver Drehrichtung des Rotors (11) in einer Position sperren, in der die Rotormagnetisierungsrichtung (41) mit der Statorfeldrichtung (39) einen positiven oder negativen Blockierwinkel K von ca. 90° einschließt, und in den anderen Rotorstellungen die Rotordrehung nicht behindert.
- der freie Bewegungsraum des Antriebsnockens (115') längs der Bewegungsbahn (17') einen Bewegungsspielwinkel ε von etwa 180° aufweist,
- der Quotient aus Lastreibungsmoment und Lastträgheitsmoment größer ist als der Quotient aus der Klebemomentamplitude und dem Rotorträgheitsmoment (Fig. 4a).

9. Anlaufhilfe nach einem der Ansprüche 4 bis 8, dadurch gekennzeichnet, daß das Untersetzungsverhältnis 1:4 beträgt und bei Parallelstellung bei anliegenden negativen Rotor- und Lastspielwänden der Sperrwinkel K', das ist der freie Winkel, den die auf dem Getriebezahnrad (51) angebrachten Sperrnasen (23) zurücklegen können bei negativer Drehrichtung des Getriebezahnrades (51), bevor eine von ihnen gegen das Sperrglied (27) schlägt, einen Betrag von ca. 22,5° aufweist.

10. Anlaufhilfe nach einem der Ansprüche 7 oder 8, dadurch gekennzeichnet, daß die Bewegungsbahn (17, 17') eine Nut ist und die Spielwände (17a, 17b, 17'a, 17'b) der Bewegungsbahn (17, 17') die Nutenden sind.

11. Anlaufhilfe nach einem der Ansprüche 7 oder 8, dadurch gekennzeichnet, daß bei der Verwendung von mehr als einer Bewegungsbahn (17'_{z}, 17''_{z}), die jede mit einem Lastnocken (15', 15'') zusammenwirken, die Bahnen auf verschiedenen Radien angeordnet verlaufen zur Erzielung eines größeren Spielwinkels (Fig. 5).

## Claims

1. A starting device for a two-pole single-phase synchronous motor with a permanent-magnet rotor (11) and a magnetic detent torque, which viewed over one revolution exhibits positive and negative values with resulting stable and unstable rest positions, the stable rest positions being offset in the positive direction relative to the average field direction (39) of the stator field (9) by the asymmetry angle γ, and a critical detent torque M_{Klkr} being active in the parallel position of the stator field (9) and the rotor field (41), the staring device having a rotational backlash between a driving member connected to the rotor (11) and a load member, and a directional blocking device (22), the backlash angle ε of the rotational backlash between the load-side and the rotor-side members, through which angle the members can rotate relative to each other in the mutually disengaged condition, being limited in the positive and the negative direction of rotation by means of positive and negative backlash walls of the members, characterized in that
- for loads for which the critical detent torque is smaller than the load torque prevailing during running-out or stating in the parallel position there is provided a directional blocking device (22) which intervenes depending upon the position of the rotor (11), which device in the 180° spaced-apart rotational positions of the rotor, without the cooperation of the load-side member (19) which is coupled via rotational backlash, influences the rotor (11) to block the positive directions of rotation in which the direction (41) of magnetisation of the rotor (11) and the stator field direction (39) subtend a negative blocking angle K larger than the asymmetry angle γ, and in the other rotor positions does not obstruct the rotor rotation,
- the backlash angle ε is larger than the blocking angle K,
- the quotient of the load friction torque and the load inertial moment is larger than the quotient of the detent torque amplitude and the rotor inertial moment.

2. A staring device as claimed in Claim 1, characterized in that the backlash angle ε is larger than 90° minus the asymmetry angle γ, and is preferably 120° to 140°.

3. A starting device as claimed in Claim 1 or 2, characterized in that the directional blocking device (22) comprises a blocking member (27) which is movably supported at the housing side and two blocking noses (23) which are rotationally locked to the rotor (11), and the rotational backlash is provided by a coupling member (33), which is formed on the rotor shaft (13) or as a separate part which is fixedly connected to said rotor shaft, which coupling member comprises laterally outward drive projections (15) having substantially radial positive and negative rotor-backlash walls (38, 49), and a member (19) situated on the load, which member engages around the coupling member (33) with inward load projections (37) having substantially radial positive and negative load-backlash walls (35, 36), the range of free rotation between the outward and inward projections (15, 37) being equal to the backlash angle ε (Figs. 1 and 2).

4. A starting device as claimed in Claim 1, characterized in that
- a drive pinion (50) is arranged on the rotor shaft (13), which is fixedly connected to the rotor (11), and meshes with a transmission wheel (51) having an integral reduction ratio relative to the drive pinion (50),
- on the transmission wheel (51) there is provided a coupling member (33) having laterally inward drive projections (37g) with positive and negative rotor-backlash walls (38g, 49g), which drive projections cooperate with load projections (15g) provided on a load shaft (20) and having load-backlash walls (35g, 36g),
- the transmission wheel (51) is provided with a number of blocking noses (23), corresponding in number to 2 times the reduction ratio, which blocking noses in conjunction with a blocking member (27), which is supported on the housing, and dependent upon the position of the transmission wheel (51) and hence directly dependent upon the rotor position block the positive direction of rotation of the rotor (11) in a rotary position in which the direction of magnetisation (41) of the rotor (11) and the stator field direction (39) subtend a negative blocking angle K larger than the asymmetry angle γ, and in the other rotor positions do not obstruct the rotation of the rotor,
- a backlash angle ε is provided between the rotor-backlash walls (38g, 49g) of the coupling member (33) arranged on the transmission wheel (51) and the load-backlash walls (35g, 36g) of the load projection (15g) arranged on the load shaft (20) to allow a free rotation of the rotor (11) through an angle larger than the blocking angle K, preferably larger than 90° - γ,
- the quotient of the load friction torque and the load inertial moment is larger than the quotient of the detent torque and the rotor inertial moment (Fig. 3).

5. A starting device as claimed in Claim 1, characterized in that
- a drive pinion (50) is arranged on the rotor shaft (13), which is fixedly connected to the rotor (11), and meshes with a transmission wheel (51) having an integral reduction ratio relative to the drive pinion (50),
- on the transmission wheel (51) there is provided a coupling member (33) having laterally inward drive projections (37g) with positive and negative rotor-backlash walls (38g, 49g), which drive projections cooperate with load projections (15g) provided on a load shaft (20) and having load-backlash walls (35g, 36g),
- a number of blocking members (27), corresponding in number to the reduction ratio, are rotatably supported on the housing, which blocking members, in conjunction with two blocking noses (23) arranged symmetrically on the transmission wheel (51) and dependent upon the position of the transmission wheel (51) and hence directly dependent upon the rotor position, block the positive direction of rotation of the rotor (11) in a rotary position in which the direction of magnetisation (41) of the rotor (11) and the stator field direction (39) subtend a negative blocking angle K larger than the asymmetry angle γ, and in the other rotor positions do not obstruct the rotation of the rotor,
- a backlash angle ε is provided between the rotor-backlash walls (38g, 49g) of the coupling member (33) arranged on the transmission wheel (51) and the load-backlash walls (35g, 36g) of the load projection (15g) arranged on the load shaft (20) to allow a free rotation of the rotor (11) through an angle larger than the blocking angle K, preferably larger than 90° - γ,
- the quotient of the load friction torque and the load inertial moment is larger than the quotient of the detent torque and the rotor inertial moment.

6. A starting device as claimed in Claim 1, characterized in that
- a drive pinion (50) is arranged on the rotor shaft (13), which is fixedly connected to the rotor (11), and meshes with a transmission wheel (51) having an integral reduction ratio relative to the drive pinion (50),
- on the transmission wheel (51) there is provided a coupling member (33) having one or more laterally inward drive projections (37g) with positive and negative rotor-backlash walls (38g, 49g) for cooperation with at least one load projection (15g) provided on a load shaft (20) and having load-backlash walls (35g, 36g),
- an element having one or more blocking noses (23) which are uniformly spaced along its circumference are provided on the transmission wheel (51) and cooperate with a blocking member (27) having a blocking pin (31),
- the backlash angle ε between the drive projections (37g) and the load projections (15g) is substantially equal to 360° divided by the number of blocking noses (23) which, dependent upon the position of the transmission wheel (51) and hence directly dependent upon the rotor position, block the positive direction of rotation of the rotor (11) in a rotary position in which the direction (41) of magnetisation of the rotor (11) and the stator field direction (39) subtend a negative blocking angle K larger than the asymmetry angle γ and preferably equal to -90°, and do not obstruct the rotation of the rotor in the other rotor positions,
- the quotient of the load friction torque and the load inertial moment is larger than the quotient of the detent torque and the rotor inertial moment.

7. A starting device as claimed in Claim 1, characterized in that
- a drive pinion (50) is arranged on the rotor shaft (13), which is fixedly connected to the rotor (11), and meshes with a transmission wheel (51) having an integral reduction ratio relative to the drive pinion (50),
- the transmission wheel (51) is provided with at least one arcuate path of movement (17) having rotor-backlash walls (17a, 17b) which limit the backlash movement,
- the path of movement (17) between the rotor-backlash walls (17a, 17b) is engaged by at least one load projection (115) which is coupled to the load and has load-backlash walls (115a, 115b),
- two blocking noses (23) are fixedly arranged on the transmission wheel (51) and, in conjunction with a blocking member (27) which is supported on the housing, block the transmission wheel (51) in the positive direction of rotation in a position in which the direction (41) of magnetisation of the rotor and the stator field direction (39) subtend a positive or negative blocking angle K of approximately 90°, and do not obstruct the rotation of the rotor in the other rotor positions,
- the range of free movement of the load projection (115) along the path of movement exhibits a backlash angle ε of approximately 180°,
- the quotient of the load friction torque and the load inertial moment is larger than the quotient of the detent torque and the rotor inertial moment (Fig. 4).

8. A starting device as claimed in Claim 1, characterized in that
- a drive pinion (50) is arranged on the rotor shaft (13), which is fixedly connected to the rotor (11), and meshes with a transmission wheel (51) having an integral reduction ratio relative to the drive pinion (50),
- the transmission wheel (51) is provided with at least one drive projection (115') having rotor-backlash walls (115'a, 115'b) and cooperating with at least one load-side path of movement (17') having load-backlash walls (17'a, 17'b),
- two blocking noses (23) are fixedly arranged on the transmission wheel and, in conjunction with a blocking member (27) which is supported on the housing, block the transmission wheel (51) in the positive direction of rotation in a position in which the direction (41) of magnetisation of the rotor and the stator field direction (39) subtend a positive or negative blocking angle K of approximately 90°, and do not obstruct the rotation of the rotor in the other rotor positions,
- the range of free movement of the drive projection (115') along the path of movement (17') exhibits a backlash angle ε of approximately 180°,
- the quotient of the load friction torque and the load inertial moment is larger than the quotient of the detent torque and the rotor inertial moment (Fig. 4a).

9. A starting device as claimed in any one of the Claims 4 to 8, characterized in that the reduction ratio is 1:4 and during engagement of the negative rotor-backlash and load-backlash walls in the parallel position the blocking angle K', *i.e.* the free angle through which the blocking noses (23) on the transmission wheel (51) can move in the negative direction of rotation of the transmission wheel (51) before one of said projections abuts against the blocking member (27), is approximately 22.5°.

10. A starting device as claimed in Claim 7 or 8, characterized in that the path of movement (17, 17') is a slot and the backlash walls (17a, 17b, 17'a, 17'b) of the path of movement (17,17') are the slot ends.

11. A starting device as claimed in Claim 7 or 8, characterized in that in the case of more than one path of movement (17'_{z}, 17''_{z}) which each cooperate with one load projection (15', 15'') the paths are situated at different radii in order to obtain a larger backlash angle (Fig. 5).

## Revendications

1. Dispositif de démarrage d'a moteur synchrone monophasé bipolaire présentant un rotor à aimantation permanente (11) et a couple de retenue magnétique qui, compté sur un seul tour, a des valeurs positives et négatives causant des positions de repos stables et habiles, les positions de repos labiles étant décalées de l'angle d'asymétrie γ dans le sens positif par rapport à l'orientation de champ moyenne (39) du champ statorique (9) et un couple de retenue critique Mₖₗₖᵣ étant actif dans la position parallèle du champ statorique (9) et du champ rotorique (41), dispositif de démarrage qui est pourvu d'un jeu de rotation entre un élément entraîneur relié au rotor (11) et un élément de charge ainsi que d'un dispositif de blocage de sens (22), l'angle de jeu ε du jeu de rotation entre les constituants situés du côté de la charge et les constituants situés du côté du rotor, angle sur lequel les constituants peuvent tourner les uns par rapport aux autres dans l'état désaccouplé, étant limité dans les sens de rotation positif et négatif au moyen de parois de jeu positif et négatif, caractérisé en ce que
- pour des charges pour lesquelles le couple de retenue critique est inférieur au couple de charge agissant lors de la décélération d'arrêt ou du démarrage dans la position parallèle, est prévu un dispositif de blocage de sens (22) qui, sans coopération du constituant (19) situé du côté de la charge et couplé avec jeu de rotation agit sur le rotor (11) dans les positions de rotation du rotor décalées de 180° de façon à bloquer le sens de rotation positif dans lequel la direction d'aimantation (41) du rotor (11) fait avec l'orientation (39) du champ statorique un angle de blocage négatif K qui, en valeur absolue, est supérieur à l'angle d'asymétrie γ, dispositif de blocage de sens qui n'empêche pas la rotation du rotor dans les autres positions rotoriques,
- l'angle de jeu ε est supérieur, en valeur absolue, à l'angle de blocage K,
- le quotient du couple de frottement de la charge et du moment d'inertie de la charge est supérieur au quotient de l'amplitude du couple de retenue et du moment d'inertie du rotor.

2. Dispositif de démarrage selon la revendication 1, caractérisé en ce que l'angle de jeu ε est supérieur à 90°, diminué de l'angle d'asymétrie γ, de préférence égal à une valeur comprise entre 120° et 140°.

3. Dispositif de démarrage selon la revendication 1 ou 2, caractérisé en ce que le dispositif de blocage de sens (22) est constitué par un élément d'arrêt (27) appuyé libre en mouvement du côté de l'appareil et deux mentonnets d'arrêt 23 solidarisé en rotation avec le rotor (11), et en ce que le jeu de rotation est fourni par un élément entraîneur (33) façonné sur l'arbre rotorique (13) ou relié à celui-ci comme constituant séparé, élément entraîneur présentant des ergots d'entraînement (15) faisant saillie latéralement vers l'extérieur et ayant des parois de jeu rotorique positif et négatif (38, 49) s'étendant à peu près radialement, ainsi que par une seconde pièce façonnée (19) située sur la charge et prenant autour de l'élément entraîneur (33), seconde pièce façonné qui est pourvue d'ergots (37) faisant saillie vers l'intérieur et présentant des parois de jeu de charge positif et négatif (35, 36) s'étendant à peu près radialement, le jeu libre de rotation entre les ergots (15, 37) faisant saillie vers l'extérieur et vers l'intérieur étant égal à l'angle de jeu ε (figures 1 et 2).

4. Dispositif de démarrage selon le préambule de la revendication 1, caractérisé en ce que
- sur l'arbre rotorique (13) relié rigidement au rotor (11), est prévu un pignon moteur (50) qui est en prise avec un engrenage (51) ayant un taux de réduction entier par rapport au pignon moteur (50),
- sur l'engrenage (51), est prévu un élément entraîneur (33) pourvu d'ergots d'entraînement (37g) faisant saillie latéralement vers l'intérieur et présentant des parois de jeu rotorique négatif et positif (38g, 49g), élément entraîneur qui coopère avec des ergots de charge (15g) prévus sur un arbre de charge (20) et présentant des parois de jeu de charge (35g, 36g),
- l'engrenage (51) est pourvu de talons d'arrêt (23) au nombre correspondant au taux de réduction et qui, en coopération avec un élément d'arrêt (27) logé du côté du boîtier et en fonction de la position de l'engrenage (51) et donc en fonction directe de la position rotorique, bloquent le sens de rotation positif du rotor (11) dans une position de rotation dans laquelle la direction d'aimantation (41) du rotor (11) forme avec l'orientation de champ statorique (39) un angle de blocage négatif K qui, en valeur absolue, est supérieur à l'angle d'asymétrie γ, talons d'arrêt qui n'empêchent pas la rotation du rotor dans les autres positions rotoriques
- entre, d'une part, les parois de jeu rotorique (35g, 36g) formées sur l'élément entraîneur (33) placé sur l'engrenage (51) et, d'autre part, les parois de jeu de charge (35g, 36g) de l'ergot de charge (15g) disposé sur l'arbre de charge (20), est prévu un angle de jeu ε permettant au rotor (11) une rotation libre supérieure à la valeur absolue de l'angle de blocage K, de préférence supérieure à 90° - γ,
- le quotient du couple de frottement de charge et du moment d'inertie de charge est supérieur au quotient de l'amplitude du couple de retenue et du moment d'inertie du rotor (figure 3).

5. Dispositif de démarrage selon le préambule de la revendication 1, caractérisé en ce que
- sur l'arbre de rotorique (13) relié rigidement au rotor (11), est prévu un pignon moteur (50) qui est en prise avec un engrenage (51) présentant un taux de réduction entier par rapport au pignon moteur (50),
- sur l'engrenage (51), est prévu un élément entraîneur (33) pourvu d'ergots d'entraînement (37g) faisant saillie latéralement vers l'intérieur et présentant les parois de jeu rotorique positif et négatif (38g, 49g) qui coopèrent avec des ergots de charge (15g) présentant des parois de jeu de charge (35g, 36g) et prévues sur un arbre de charge,
- sur le boîtier, sont appuyés libres en rotation des éléments d'arrêt (27) au nombre correspondant au taux de réduction qui, en coopération avec deux mentonnets d'arrêt (23) disposés de façon symétrique sur l'engrenage (51) et en fonction de la position de l'engrenage (51) et donc en fonction directe de la position rotorique, bloquent le sens de rotation positif du rotor (11) dans une position de rotation dans laquelle la direction d'aimantation (41) du rotor (11) forme avec l'orientation de champ statorique (39) un angle de blocage négatif (K) qui, en valeur absolue, est supérieur à l'angle d'asymétrie γ, éléments d'arrêt qui n'empêchent pas la rotation du rotor dans les autres positions rotoriques,
- entre, d'une part, les parois de jeu rotorique (38g, 49g) formées sur l'élément entraîneur (33) placé sur l'engrenage (51) et, d'autre part, les parois de jeu de charge (35g, 36g) des ergots de charge disposés sur l'arbre de charge (22), est prévu un angle de jeu ε permettant au rotor (11) une rotation libre supérieure à la valeur de l'angle de blocage (K), de préférence égale à 90° - γ,
- le quotient du couple de frottement de charge et du moment d'inertie de charge est supérieur au quotient de l'amplitude du couple de retenue et du moment d'inertie du rotor.

6. Dispositif de démarrage selon le préambule de la revendication 1, caractérisé en ce que
- sur l'arbre rotorique (13) relié rigidement au rotor (11), est prévu un pignon moteur (50) qui est en prise avec un engrenage (51) ayant un taux de réduction entier par rapport au pignon moteur (50),
- sur l'engrenage (51) est prévu un élément entraîneur (33) pourvu d'un ou plusieurs ergots d'entraînement (37g) faisant salive latéralement vers l'intérieur et présentant les parois de jeu rotorique positif et négatif (38g, 49g), ergots qui coopèrent avec au moins un ergot de charge (15g) présentant des parois de jeu de charge (35g, 36g) et disposé sur un arbre de charge (20)
- sur l'engrenage (51) est prévu un élément muni d'un ou plusieurs mentonnets d'arrêt (23) répartis régulièrement sur son pourtour et qui coopèrent avec un élément d'arrêt (27) muni d'une tige d'arrêt (31),
- l'angle de jeu ε formé par l'ergot d'entraînement (37g) et l'ergot de charge (15g) est à peu près égal à 360°, divisé par le nombre de mentonnets d'arrêt (23) qui, en fonction de la position de l'engrenage (51) et par conséquent, en fonction directe de la position rotorique, bloque le sens de rotation positif du rotor (11) dans une position de rotation dans laquelle la direction d'aimantation (41) du rotor (11) forme avec l'orientation de champ statorique (39) un angle de blocage négatif K qui, en valeur absolue, est supérieur à l'angle d'asymétrie γ et de préférence égal à 90°, mentonnets d'arrêt qui, dans les autres positions rotoriques, n'empêchent pas la rotation du rotor,
- le quotient du couple de frottement de charge et du moment d'inertie de charge est supérieur au quotient de l'amplitude du couple de retenue et du moment d'inertie du rotor.

7. Dispositif de démarrage selon le préambule de la revendication 1, caractérisé en ce que
- sur l'arbre de rotorique (13) relié rigidement au rotor (11), est prévu un pignon moteur (50) qui est en prise avec un engrenage (51) présentant un taux de réduction entier par rapport au pignon moteur (50),
- sur l'engrenage (51), est prévu au moins un trajet de mouvement arqué (17) ayant des parois de jeu rotorique (17a, 17b) limitant le mouvement de jeu,
- le trajet de mouvement (17) situé entre les parois de jeu rotorique (17a, 17b) est parcouru par au moins un ergot de charge (115) couplé à la charge et présentant des parois de jeu de charge (115a, 115b),
- sur l'engrenage (51), sont fixés deux mentonnets d'arrêt (23) qui, conjointement avec un élément d'arrêt (27) logé du côté du boîtier, dans le sens de rotation positif du rotor (11), bloquent l'engrenage (51) dans une position dans laquelle la direction d'aimantation rotorique (41) forme avec l'orientation de champ statorique (39) un angle de blocage positif ou négatif K de l'ordre de 90°et qui n'empêchent pas la rotation du rotor dans les autres positions rotoriques,
- la distance de mouvement libre de l'ergot de charge (115) le long du trajet de mouvement présente un angle de jeu de mouvement ε de l'ordre de 180°,
- le quotient du couple de frottement de la charge et du moment d'inertie de la charge est supérieur au quotient de l'amplitude du couple de retenue et du moment d'inertie du rotor (figure 4).

8. Dispositif de démarrage selon le préambule de la revendication 1, caractérisé en ce que
- sur l'arbre rotorique (13) relié rigidement au rotor (11) est prévu un pignon moteur (50) qui est en prise avec un engrenage (51) présentant un taux de réduction entier par rapport au pignon moteur (50),
- l'engrenage (51) est muni d'au moins un ergot d'entraînement (115') présentant des parois de jeu rotorique (115'a, 115'b) coopérant avec au moins un trajet de mouvement (17') situé du côté de la charge et présentant au moins une paroi de jeu de charge (17'a, 17'b),
- sur l'engrenage (51), sont fixés deux mentonnets d'arrêt (23) qui, conjointement avec un élément d'arrêt (27) logé du côté du boîtier, dans le sens de rotation positif du rotor (11), bloquent l'engrenage (51) dans une position dans laquelle la direction d'aimantation rotorique (41) forme avec l'orientation de champ statorique (39) un angle de blocage positif ou négatif K de l'ordre de 90°et qui n'empêchent pas la rotation du rotor dans les autres positions rotoriques,
- la distance de mouvement libre de l'ergot de charge (115) le long du trajet de mouvement présente un angle de jeu de mouvement ε de l'ordre de 180°,
- le quotient du couple de frottement de la charge et du moment d'inertie de la charge est supérieur au quotient de l'amplitude du couple de retenue et du moment d'inertie du rotor (figure 4a).

9. Dispositif de démarrage selon l'une des revendications 4 à 8, caractérisé en ce que le taux de réduction est de 1 : 4 et en ce que, dans la position parallèle, les parois de jeu négatif rotorique et de charge étant appuyées l'une contre l'autre, l'angle de blocage K', c'est-à-dire l'angle libre, sur laquelle, dans le sens de rotation négatif de l'engrenage (51), peuvent se déplacer les mentonnets d'arrêt (23) de l'engrenage (51) avant que l'un deux porte contre l'élément d'arrêt (27), présente une valeur de l'ordre de 22,5°.

10. Dispositif de démarrage selon l'une des revendications 7 et 8, caractérisé en ce que le trajet de mouvement (17, 17') est une rainure et que les parois de jeu (17a, 17b, 17'a, 17'b) du trajet de mouvement (17, 17') sont les extrémités de la rainure.

11. Dispositif de démarrage selon l'une des revendications 7 et 8, caractérisé en ce que, lors de l'utilisation de plus d'un trajet de mouvement (17'_{z}, 17''_{z}) coopérant chacun avec un ergot de charge (15', 15''), les trajets s'étendent suivant des rayons différents pour l'obtention d'un angle de jeu plus grand (figure 5).
